# EUROPÄISCHE PATENTANMELDUNG

(11) **EP 2 422 739 A1**
(43) Veröffentlichungstag der Anmeldung: **29.02.2012**
(21) Anmeldenummer: 11006146.2
(22) Anmeldetag: 27.07.2011
(51) Int. Cl.: A61C 5/10, A61C 13/00

(54) **Verfahren zur Herstellung von Zahnersatz**

(30) Priorität: 25.08.2010 DE 102010037160
(71) Anmelder: Amann Girrbach AG, 6842 Koblach (AT)
(72) Erfinder: Broghammer, Michael, 75210 Keltern (DE); Noack, Falko, 6890 Lustenau (AT); Junglas, Joachim, 56727 Mayen (DE)
(74) Vertreter: Fechner, Thomas

(57) **Zusammenfassung**

Verfahren zur Herstellung von Zahnersatz, bei dem zur Herstellung einer Verblendung (1) auf einem Trägergerüst (2) auf eine im Raum gekrümmt angeordnete äußere Oberfläche (3) des Trägergerüsts (2) maschinell, insbesondere rechnergesteuert in Abhängigkeit eines digitalen Modells des Zahnersatzes, mehrere Schichten (4) zumindest eines Materialgemisches aufgetragen werden, wobei die Schichten (4) des Materialgemisches als im Raum gekrümmt angeordnete Schichten aufgetragen werden, wobei mehrere Schichten (4) des Materialgemisches unmittelbar aufeinander folgend aufgetragen werden. (Fig. 1)

## Beschreibung

Die vorliegende Erfindung betrifft ein Verfahren zur Herstellung von Zahnersatz, bei dem zur Herstellung einer Verblendung auf einem Trägergerüst auf eine im Raum gekrümmt angeordnete äußere Oberfläche des Trägergerüsts maschinell, insbesondere rechnergesteuert in Abhängigkeit eines digitalen Modells des Zahnersatzes, mehrere Schichten zumindest eines Materialgemisches aufgetragen werden, wobei die Schichten des Materialgemisches als im Raum gekrümmt angeordnete Schichten aufgetragen werden.

Weiters betrifft die Erfindung auch eine Verblendvorrichtung zur Durchführung des Verfahrens.

Bei der Herstellung von Zahnersatz kommt es nicht nur darauf an, den zu ersetzenden Zahn oder Teile eines Zahnes in Festigkeit und Form optimal auszuführen sondern auch darauf, das äußere Erscheinungsbild des Zahnersatzes bzw. dessen Einfärbung möglichst genau an die im Mund des Patienten noch vorhandenen Zähne anzupassen. Hierzu ist es beim Stand der Technik bekannt, von Hand auf ein Trägergerüst die Verblendung des Zahnersatzes zu modellieren. Dies ist sehr aufwendig und teuer. Beim Stand der Technik sind auch schon verschiedene maschinelle Herstellungsverfahren bekannt. So offenbart die US 4,937,928 ein gattungsgemäßes Verfahren zur Herstellung von Zahnersatz. Hier wird mit Hilfe eines CAD/CAM-Systems der Zahnersatz Schicht für Schicht aufgebaut, indem einzelne Porzellanschichten auf ein metallenes Trägergerüst aufgebracht werden und jede Schicht nach ihrem Auftrag gesintert und mechanisch nachbearbeitet wird, bevor die nächste Schicht aufgetragen wird. Dieses maschinelle Verfahren, wie es der Stand der Technik zeigt, ist nach wie vor sehr aufwendig und teuer, da nach jeder Schicht aufgebrachten Materials eine Sinterung und ein mechanisches Nacharbeiten erfolgt.

Neben dem genannten gattungsgemäßen Verfahren sind beim Stand der Technik auch gattungsfremde Verfahren bekannt. Sie basieren darauf, den herzustellenden Zahnersatz rechnerisch zunächst in horizontale Schnitte zu zerlegen und diese Horizontalschnitte durch eine entsprechende Horizontalschichtung nacheinander aufzubauen. Bei diesen gattungsgemäßen Verfahren werden die Schichten des Materialgemisches somit in Horizontallagen und nicht als im Raum gekrümmt angeordnete Schichten aufgetragen. Ein solches Verfahren ist z. B. in der US 7,686,989 B2 offenbart.

Aufgabe der Erfindung ist es, ein alternatives gattungsgemäßes Verfahren zur Verfügung zu stellen, welches die Herstellung von Zahnersatz in effektiver und damit kostengünstiger Art und Weise erlaubt.

Hierfür ist gemäß der Erfindung vorgesehen, dass mehrere Schichten des Materialgemisches unmittelbar aufeinander folgend aufgetragen werden.

Mit anderen Worten ist somit vorgesehen, dass mehrere oder zumindest zwei Schichten des Materialgemisches unmittelbar aufeinanderfolgend aufgetragen werden, ohne dass dazwischen andere Zwischenschritte ausgeführt werden. Insbesondere ist somit kein Zwischensintern und mechanisches Bearbeiten nach jeder einzelnen Schicht vorgesehen. Dies führt zu einer wesentlich effektiveren und schnelleren Herstellung des Zahnersatzes. Dabei muss nicht zwingend vorgesehen sein, dass alle Schichten ohne Zwischenbearbeitung aufgebaut werden. Es reicht aus, wenn zwischen anderen, gegebenenfalls notwendigen, Bearbeitungsschritten zwei oder mehrere Schichten des Materialgemisches unmittelbar aufeinander folgend aufgetragen werden. Die erste Schicht wird dabei als gekrümmt im Raum angeordnete Schicht direkt auf das Trägergerüst bzw. dessen äußere Oberfläche aufgebracht. Bei den nachfolgenden, gekrümmt im Raum angeordneten Schichten folgt eine indirekte Auftragung auf das Trägergerüst, da diese Schichten auf die bereits auf dem Trägergerüst vorhandenen Schichten aufgebaut werden. Die aufgebrachten Schichten liegen dann auch räumlich gesehen unmittelbar aufeinander folgend aufeinander auf.

Der Vollständigkeit halber wird darauf hingewiesen, dass unter dem Begriff Zahnersatz sowohl der Ersatz eines Teils eines Zahnes als auch der Ersatz eines gesamten Zahnes als auch der Ersatz mehrerer Zähne z. B. in Form einer Brücke und/oder mehrerer Teile von Zähnen zu verstehen ist. Im Zuge der Erfindung ist vorzugsweise vorgesehen, dass das Trägergerüst Bestandteil des fertig hergestellten Zahnersatzes ist und daher mit diesem im Mund des Patienten eingesetzt bzw. eingegliedert wird.

Bevorzugte Ausgestaltungsformen der Erfindung sehen vor, erst nach dem Auftrag von mehreren Schichten des Materialgemisches in einem gesonderten Verfahrensschritt, vorzugsweise erst nach Auftrag aller Schichten der Verblendung, ein Härten der bereits aufgetragenen Schichten des Materialgemisches erfolgt. Im gesonderten Verfahrensschritt kann z. B. ein Sintern oder Lichthärten durchgeführt werden. Besonders bevorzugt ist vorgesehen, dass als Materialgemisch eine Mischung aus zumindest einer flüssigen Komponente, vorzugsweise in Form eines Binders, und zumindest einer pulverförmigen Komponente, vorzugsweise in Form eines Keramikpulvers oder eines Kunststoffpulvers, aufgetragen wird. Eine Variante besteht dabei darin, dass als Materialgemisch eine, vorzugsweise vorgemischte oder erst unmittelbar vor dem oder beim Auftragen gemischte, Suspension aufgetragen wird. In anderen Varianten des erfindungsgemäßen Verfahrens kann aber auch vorgesehen sein, dass die Schichten des Materialgemisches jeweils in zumindest zwei voneinander getrennten Verfahrensschritten aufgetragen werden, indem, vorzugsweise zunächst, in einem Verfahrensschritt zumindest eine flüssige Komponente, vorzugsweise in Form eines Binders, und, vorzugsweise daran anschließend, in einem anderen Verfahrensschritt zumindest eine pulverförmige Komponente, vorzugsweise in Form eines Keramikpulvers oder eines Kunststoffpulvers, aufgetragen wird.

Das erfindungsgemäße Verfahren kann mit unterschiedlichsten Materialgemischen umgesetzt werden. Eine erste Gruppe von Varianten sieht dabei vor, keramische Materialien zu verwenden. Dabei sind beide oben genannten Varianten möglich. Das keramische Material kann also bereits als Suspension aufgebracht werden, um die Schichten auszubilden. Es ist aber genauso möglich, vorzugsweise zunächst, zumindest eine flüssige Komponente, vorzugsweise in Form eines Binders, und, vorzugsweise daran anschließend, das Keramikmaterial in Form eines Keramikpulvers aufzutragen. Dabei können verschiedene Binder als flüssige Komponente zum Einsatz kommen. Besonders bevorzugt ist dabei vorgesehen, dass der Binder einen Klebeanteil, vorzugsweise basierend auf Eiweiß, aufweist. Die Binder können z. B. eine Zusammensetzung aufweisen, mit einem Klebeanteil wie z. B. Eiweiß, Gelatine, Leim und dergleichen zwischen 2 und 80 Volumen-%. Weiters kann die flüssige Komponente bzw. der Binder eine flüchtige Komponente, vorzugsweise Alkohol, mit einem Volumenanteil zwischen 5 und 50% aufweisen. Dies kann eine schnelle Trocknung unterstützen. Weiters ist es zur Erfüllung einer Verdünnungsfunktion möglich, dass die flüssige Komponente bzw. der Binder zwischen 20 und 40 Volumen-% destilliertes Wasser aufweist. Darüber hinaus können in der flüssigen Komponente Benetzungsverbesserer und Verdickungsmittel wie z. B. Zellulose vorhanden sein. Im Vordergrund steht die Klebewirkung dieser flüssigen Komponente. Günstig ist es aber auch, wenn eine flüssige Komponente gewählt wird, welche rückstandslos beim keramischen Brand bzw. Sinterbrand verbrennt. Günstigerweise sollte die flüssige Komponente schnelltrocknend und selbsttrocknend sein, um ein zügiges Auflegen von mehreren Schichten nacheinander zu gewährleisten. Das Keramikpulver wird in geeigneter Partikelgröße, Partikelgrößenverteilung und Partikelform ausgewählt. Es werden dabei Materialien bzw. Gläser gewählt, die auch bei nur sehr geringer Schichtdicke die Farbwirkung geben oder Transluzenz bringen. Dies kann in Kombination mit speziellen Trägergerüsten wie z. B. eingefärbten anatomischen reduzierten Trägergerüsten weiter verbessert werden. Günstig ist Keramikmaterial mit guter Benetzbarkeit. Als Alternative zur Verwendung von keramischen Materialien können auch Kunststoffe als Materialgemisch bei erfindungsgemäßen Verfahren eingesetzt werden. Auch hier ist sowohl das Aufbringen von vorgemischten Suspensionen als auch das nacheinander Aufbringen von flüssiger Komponente und pulverförmiger Komponente möglich. Es können verschiedene Polymere zum Einsatz kommen. Ihr Aushärten kann chemisch aber auch in gesonderten Verfahrensschritten, z. B. durch Lichthärten, erfolgen. Sowohl die auf keramischer Basis als auch die auf Kunststoffbasis zusammengesetzten Materialgemische können unterschiedlich eingefärbt werden, um unterschiedliche Farbnuancen herzustellen. Dabei kann sowohl die flüssige als auch die pulverförmige Komponente als auch die gesamte Suspension eingefärbt sein. Zusätzlich können Farbeffekte auch über entsprechend eingefärbte Oberflächen des Trägergerüstes erzeugt werden. Das Gleiche gilt für die Transluzenzeigenschaften des verwendeten Materials.

In der Regel ist ein zu ersetzender natürlicher Zahn in unterschiedlichen Bereichen unterschiedlich eingefärbt, was daher auch bei dem herzustellenden Zahnersatz realisierbar sein sollte. Um dies auch beim künstlich herzustellenden Zahnersatz nachvollziehen zu können, ist günstigerweise vorgesehen, dass zumindest ein erstes Materialgemisch in einem ersten Teilbereich oder in ersten Teilbereichen der herzustellenden Verblendung aufgetragen wird und zumindest ein anderes, vorzugsweise anders eingefärbtes, Materialgemisch oder mehrere andere, vorzugsweise anders eingefärbte, Materialgemische in anderen Teilbereichen der herzustellenden Verblendung aufgetragen wird bzw. werden.

In Vorbereitung der bereits genannten Schritte des erfindungsgemäßen Verfahrens und seiner bevorzugten Ausgestaltungsformen liegt die Patientensituation günstigerweise als virtuelles Modell vor. Dabei kann sowohl die Farb- als auch die Geometrieinformation durch an sich bekanntes intraorales oder extraorales Scannen von tatsächlich vorhandenen Zähnen, von Modellen oder von Abformungen, also Negativmodellen erfolgen. Die Farbinformationen können natürlich auch anderweitig, z. B. durch Vergleich mit noch existierenden Nachbarzähnen gewonnen werden. Günstigerweise ist dann vorgesehen, den Zahnersatz als anatomische Form, z. B. unter Verwendung einer CAD-Software zu konstruieren. Anschließend kann auf digitaler Ebene der insgesamt herzustellende Zahnersatz in ein Trägergerüst und eine Verblendung rechnerisch zerlegt werden. Bei dem Trägergerüst kann man auf Standardformen zurückgreifen oder dieses, wie weiter unten erläutert und beim Stand der Technik an sich bekannt, vorab herstellen. Das Trägergerüst bildet günstigerweise eine verkleinerte anatomische Zahnform, welche z.B. aus einer, in einer geeigneten Software hinterlegten Standardzahnform erzeugt werden kann. Als nächster Schritt kann dann vorgesehen sein, die Verblendung rechnerisch in unterschiedliche Farbzonen bzw. unterschiedlich eingefärbte Teilbereiche zu unterteilen. Dies kann z. B. anhand von hinterlegten Schichtungsfarbschemata aus einer Bibliothek erfolgen. Die Einteilung der unterschiedlichen Farbzonen bzw. unterschiedlich eingefärbten Teilbereiche kann aber auch anhand von vorangegangenen Farbanalysen an noch vorhandenen Zähnen des Patienten erfolgen. Bei der Herstellung des Zahnersatzes durch Auftrag von im Raum gekrümmt angeordneten Schichten auf das Trägergerüst können die Farbzonen bzw. Teilbereiche frei gewählt werden. So ist es günstigerweise vorgesehen, zunächst den ersten Teilbereich durch den Aufbau mehrerer Schichten herzustellen, um daran anschließend anders einzufärbende Teilbereich mittels des entsprechenden Schichtaufbaus zu fertigen. So kann sich die Anfertigung von Teilbereich an Teilbereich anschließen, bis die Verblendung in ihrer endgültigen Form hergestellt ist. Günstigerweise wird bei der Berechnung der Geometrie des herzustellenden Zahnersatzes ein je nach verwendetem Materialgemisch zu erwartender Schrumpfungs- oder Ausdehnungsfaktor mit berücksichtigt. So kann bei Verwendung von keramischen Materialien z. B. der Sinterschrumpf mit berücksichtigt werden. Günstig ist es weiters, wenn eine Echtfarbendarstellung des zu verblendenden Zahnes am Bildschirm zur Kontrolle bereitgestellt wird. Weiters werden bei der Herstellung des Zahnersatzes auf Basis eines digitalen, z. B. mittels CAD konstruierten Modells günstigerweise Koordinaten bzw. Nullpunktsysteme zugrunde gelegt, welche eine entsprechende Übertragung der geometrischen Informationen aus dem digitalen Modell auf den tatsächlich herzustellenden Zahnersatz erlauben. Hierdurch ist die Positionierung und Repositionierung des Trägergerüstes im Koordinatensystem des jeweiligen Bearbeitungsschrittes immer gewährleistet. Die Datensätze zur Herstellung der Verblendungen werden günstigerweise mittels CAD konstruiert.

Es ist auch möglich, das Trägergerüst mittels CAD zu konstruieren. Die Herstellung des Trägergerüstes kann nach allen, beim Stand der Technik bekannten Varianten erfolgen. Als Trägergerüst wird jedenfalls der Teil des Zahnersatzes angesehen, auf welchen die Schichten der Verblendung aufgetragen werden, um den Zahnersatz zu vervollständigen. Das Trägergerüst ist dann beim Einsetzen des Zahnersatzes in das Gebiss des Patienten der Teil, welcher am Zahnstumpf des Patienten direkt zur Anlage kommt. Das Trägergerüst ist daher der Teil des Zahnersatzes, über den die Befestigung im Mund des Patienten erfolgt.

Der Werkstoff zur Herstellung des Trägergerüstes kann variieren. Exemplarisch sind keramische Werkstoffe wie Zirkondioxid, Lithiumdisilikat, Glaskeramiken, Sinterkeramiken usw.. Es kann sich aber auch um metallische Trägergerüste aus Nichtedelmetall oder Edelmetall, aus Titan oder Metalllegierungen handeln. Weiters können auch Trägergerüste aus Kunststoffen bzw. Polymeren zum Einsatz kommen. Die Trägergerüste können, wie an sich bekannt, mittels Gießen, Lasersintern, Fräsen, Schleifen, Drucken, Stereolithographie usw. hergestellt werden. Es kann auch eine Trägergerüstaufnahme mitgefertigt werden, welche der Befestigung in der weiter unten genannten Verblendvorrichtung dient. Die Trägergerüstaufnahme kann zum einen direkt am Trägergerüst befestigt bzw. angeformt sein. In diesem Fall wird sie beim Herstellungsprozess des Trägergerüsts mit gefertigt. Die Geometrie der Trägergerüstaufnahme kann z.B. in einer geeigneten Software hinterlegt sein. Alternativ kann die Trägergerüstaufnahme als Modell gefertigt werden, welches formschlüssig, z.B. in einem inneren Hohlraum des Trägergerüsts, am Trägergerüst befestigt werden kann. Die Oberfläche des Trägergerüstes, auf das die Schichten der Verblendung aufgebracht werden, kann durch Abstrahlen, Reinigen, Anlösen usw. vorbehandelt bzw. konditioniert werden. Das Trägergerüst kann einen inneren Hohlraum aufweisen, welcher zur Befestigung am Zahnstumpf dient. Dieser Hohlraum bzw. die für die Befestigung am Zahnstumpf vorgesehen Kontaktflächen werden günstigerweise beim Aufbringen der Schichten der Verblendung abgedeckt. Wie bereits erwähnt, kann die Oberfläche des Trägergerüstes durch Auftrag von entsprechenden Farben, Opakern und/oder Linern zur Einfärbung des Zahnersatzes mit beitragen. Dabei können die genannten Farben, Intensivfarben, Opaker und Liner auf die gesamte äußere Oberfläche des Trägergerüsts oder nur in einzelnen Teilbereichen aufgetragen werden. Der Auftrag kann im Sprühverfahren, punktuell oder großflächig, beispielsweise mittels Airbrushbeschichtung erfolgen. Alternativen sind der Auftrag aus Spritzkanülen oder mit Pinseln. Ist das Trägergerüst aus keramischem Material gefertigt, so kann ein erster Sinterbrand des Trägergerüstes erfolgen, bevor die Schichten der Verblendung aufgebracht werden.

Zur Durchführung des erfindungsgemäßen Verfahrens kann eine Verblendvorrichtung verwendet werden, welche dadurch gekennzeichnet ist, dass die Verblendvorrichtung zumindest eine Trägergerüstaufnahme, an der das Trägergerüst befestigbar ist, und zumindest eine Positioniereinrichtung zur Positionierung der Trägergerüstaufnahme im Raum und zumindest eine Auftragseinrichtung, vorzugsweise mehrere von einander getrennte Auftragseinrichtungen, zum Auftrag von Materialgemisch und zumindest eine rechnergestützte Steuereinrichtung aufweist, wobei die Positioniereinrichtung und/oder die Auftragseinrichtung(en) von der Steuereinrichtung ansteuerbar, vorzugsweise im Raum bewegbar, ist bzw. sind. Günstigerweise weist diese Verblendvorrichtung eine Vibrationseinrichtung zum Vibrieren des Zahnersatzes bzw. der Trägergerüstaufnahme auf. Um sehr rasch in verschiedenen Teilbereichen verschiedenes, insbesondere verschieden eingefärbtes, Materialgemisch auf dem Trägergerüst aufbringen zu können, sehen bevorzugte Ausgestaltungsformen der Verblendvorrichtung vor, dass sie ein Magazin für die Bereitstellung verschiedener, vorzugsweise verschiedenfarbiger, Materialgemische und/oder Komponenten von Materialgemischen aufweist. Um die einzelnen Schichten möglichst rasch trocknen zu können, kann die Verblendvorrichtung weiters zumindest eine Trocknungseinrichtung zum Trocknen des Materialgemisches aufweisen. Um kleinere Formkorrekturen durchzuführen, kann die Verblendvorrichtung weiters zumindest eine mechanische Formungseinrichtung zum Nachbearbeiten der Form der aufgetragenen Schichten des Materialgemisches aufweisen. Als Formungseinrichtung sind Bohr-, Schleif- oder andere Formungswerkzeuge wie Klingen denkbar.

Weitere Merkmale und Einzelheiten bevorzugter Ausgestaltungsformen der Erfindung ergeben sich aus der nachfolgenden Figurenbeschreibung. Es zeigen:
- Fig. 1: eine schematisierte Darstellung eines Längsschnittes durch einen bereits auf einem Zahnstumpf angebrachten erfindungsgemäß hergestellten Zahnersatz;
- Fig. 2: eine korrespondierende Explosionsdarstellung;
- Fig. 3: eine schematisierte Detaildarstellung des Ausschnitts 21 aus Fig. 1 und
- Fig. 4: eine schematisierte Darstellung einer Verblendvorrichtung zur Durchführung eines erfindungsgemäßen Verfahrens.

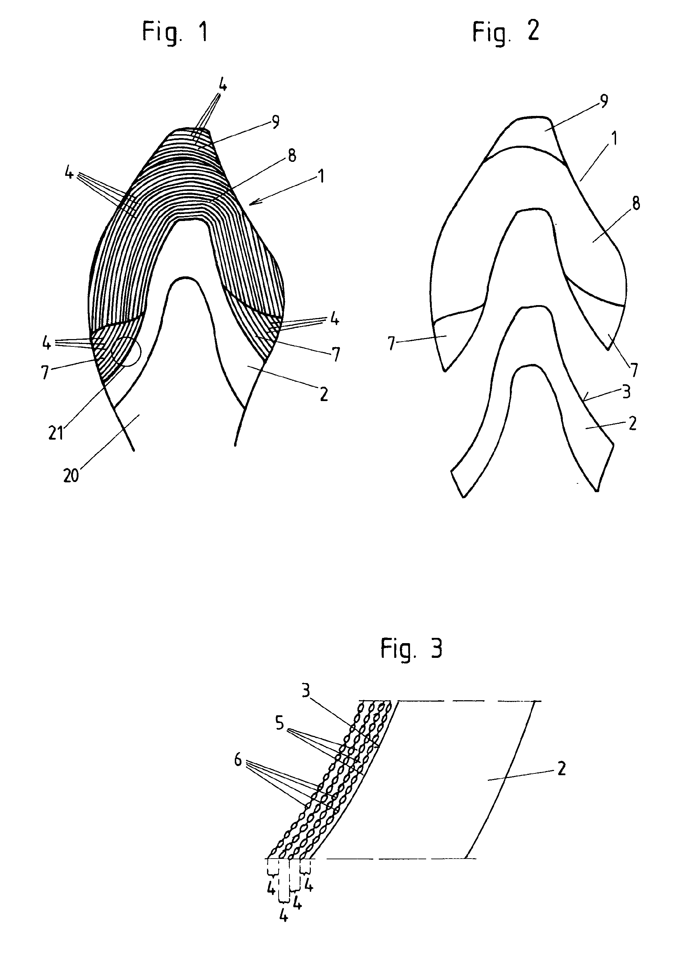

Fig. 1 zeigt schematisiert in einem Längsschnitt einen, gemäß des erfindungsgemäßen Verfahrens hergestellten Zahnersatz 1, welcher mittels eines Trägergerüstes 2 bereits auf dem Zahnstumpf 20 befestigt ist. Die auf dem Trägergerüst 2 mittels des erfindungsgemäßen Verfahrens aufgetragene Verblendung 1 weist exemplarisch die verschiedenfarbigen Teilbereiche 7, 8 und 9 auf. Jeder dieser Teilbereiche wurde durch das Aufbringen von mehreren Schichten 4 des Materialgemisches hergestellt, wobei erfindungsgemäß immer mehrere Schichten 4 des Materialgemisches unmittelbar aufeinanderfolgend aufgetragen wurden.

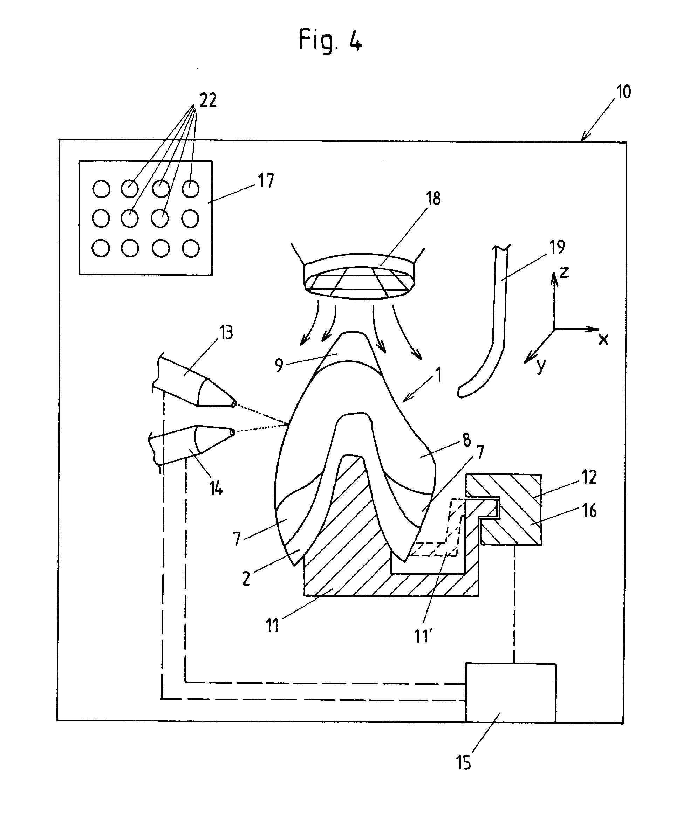

Die Schichten 4 folgen in ihrer Form der jeweiligen Form der äußeren Oberfläche 3 des Trägergerüstes 2 bzw. der darunterliegenden Schichten 4. Bei den Schichten 4 des Materialgemisches handelt es sich also um im Raum gekrümmt angeordnete Schichten. Die Dicke der Schichten 4 kann variieren. In Fig. 2 wurde auf die schematische Darstellung der einzelnen Schichten 4 verzichtet. Weiters sind die Verblendung 1 mit ihren Teilbereichen 7, 8 und 9 und das Trägergerüst 2 mit seiner äußeren Oberfläche 3 in Explosionsdarstellungen dargestellt, um die Abgrenzung zwischen diesen beiden Teilstücken des Zahnersatzes zu veranschaulichen. Fig. 3 zeigt den Ausschnitt 21 aus Fig. 1 und damit vergrößert den Aufbau der Schichten 4 auf der äußeren Oberfläche 3 des Trägergerüstes 2. Bei der in Fig. 3 gezeigten Variante wurde das jeweils eine Schicht 4 bildende Materialgemisch in jeweils zwei voneinander getrennten Verfahrensschritten aufgetragen. In einem ersten Verfahrensschritt wurde zunächst jeweils die flüssige Komponente 5 auf das Trägergerüst 2 bzw. die darunterliegende Schicht 4 aufgetragen. Anschließend wurde in einem nachfolgenden, anderen Verfahrensschritt auf diese flüssige Komponente 5 die pulverförmige Komponente 6 aufgetragen. Eine Schicht 4 wird daher immer aus den außen aufliegenden pulverförmigen Partikeln 6 und der darunter liegenden flüssigen Komponente 5 gebildet, wie dies in Fig. 3 auch schematisch dargestellt ist. Zum Auftrag der flüssigen Komponente können Sprühverfahren, ein Bestäuben, ein Zerstäuben oder auch Lackierverfahren eingesetzt werden. Günstig ist jedenfalls ein feiner dünner Auftrag. Der Auftrag kann punktuell, bereichweise oder auf der gesamten darunter liegenden Oberfläche erfolgen, je nachdem, wie groß der jeweils momentan herzustellende Teilbereich 7, 8 oder 9 ist. Nach dem Auftrag bildet die flüssige Komponente 5 einen feuchten Bereich auf dem Trägergerüst 2 bzw. den darunter liegenden Schichten 4, in den die pulverförmige Komponente 5 eingebracht werden kann und dort dann anhaftet. Die pulverförmige Komponente wird in der vorab befeuchteten Zone bzw. im jeweiligen Teilbereich, welcher mit der flüssigen Komponente benetzt ist, aufgebracht. Zum Aufbringen der pulverförmigen Komponente kann eine Sprühtechnik, eine Streutechnik, ein Berieseln, ein Pudern oder auch eine Strahltechnik, um nur einige Beispiele zu nennen, verwendet werden. Auch hier ist ein feiner dünner Auftrag günstig. Der Auftrag kann wiederum punktuell oder in einem Teilbereich oder auf der gesamten darunterliegenden Struktur erfolgen. Der Auftrag kann partikelweise oder mit gezieltem Pulverstrahl erfolgen. Beim Auftrag auf die flüssige Komponente 5 sättigt sich die pulverförmige Komponente 6 mit der Flüssigkeit der flüssigen Komponente 5. Durch den wechselnden Auftrag von flüssiger Komponente 5 und pulverförmiger Komponente 6 bilden sich die Schichten 4 aus. Ist in dieser Art und Weise der gewünschte Teilbereich 7, 8 oder 9 mit seiner gewünschten farblichen Ausgestaltungsform hergestellt, so kann unter Verwendung eines entsprechend anders eingefärbten Materialgemisches der Aufbau eines anderen Teilbereiches 7, 8 oder 9 in entsprechender Art und Weise erfolgen. Die geometrischen Informationen zur Größe und Lage des jeweiligen Teilbereiches 7, 8 oder 9 wird günstigerweise dem vorab erstellten digitalen Modell des Zahnersatzes entnommen. Natürlich ist es, falls dies gewünscht ist, auch denkbar, die gesamte Verblendung 1 aus einem einzigen Teilbereich, das heißt also mit einer einzigen farblichen Ausgestaltungsform herzustellen. In Fig. 3 ist insbesondere die Variante des erfindungsgemäßen Verfahrens dargestellt, in der zunächst die Benetzung mittels flüssiger Komponente 5 und dann das Aufbringen der pulverförmigen Komponente 6 erfolgt. Dies ist nicht die einzige mögliche erfindungsgemäße Variante, wie die Schichten 4 hergestellt werden können. Anstelle dieser Vorgehensweise können die Schichten 4 auch als bereits vorgemischte Suspension aus flüssiger Komponente 5 und pulverförmiger Komponente 6 entsprechend als im Raum gekrümmte Schichten 4 aufgebracht werden. Es ist auch denkbar, über geeignete Auftragseinrichtungen 13 und 14 die flüssige Komponente 5 unmittelbar vor ihrem Auftreffen auf dem Untergrund mit der pulverförmigen Komponente 6 zu einer Suspension zu mischen. Der Auftrag der Schichten erfolgt günstigerweise immer von dick nach dünn. Start des Auftrags ist günstigerweise jeweils in großvolumigen Bereichen der zu erstellenden Teilbereiche 7, 8 oder 9. Die Steuerung der zum Materialauftrag verwendeten Auftragseinrichtungen 13 und 14, sowohl was das verwendete Material als auch die Menge als auch die geometrischen Informationen betrifft, wird günstigerweise in Abhängigkeit vom erstellten digitalen Modell von der in Fig. 4 gezeigten Steuereinrichtung 15 vorgenommen.

Um die Homogenität der Verblendung 1 zu gewährleisten, ist es günstig, wenn das bereits aufgetragene Materialgemisch, vorzugsweise mittels Vibrieren des Trägergerüstes 2, in Vibrationen versetzt wird. Dies führt zu einer Verdichtung des bereits aufgebrachten Materialgemisches. Die Vibration verringert so die Schrumpfung und vermeidet die Rissbildung beim Aushärten und insbesondere beim Sintern des aufgetragenen Materialgemisches. Die Vibration wird günstigerweise, wie bereits genannt, über das Trägergerüst 2 eingebracht. Die Vibrationseinrichtung 16 ist schematisiert in Fig. 4 gezeigt.

Die in Fig. 4 schematisiert gezeigte Verblendvorrichtung 10 dient vorrangig dem maschinellen Auftrag der Schichten 4 auf das Trägergerüst 2. In Fig. 4 ist der Zahnersatz bzw. die Verblendung 1 schon nahezu vollständig hergestellt. Zur Befestigung und Positionierung ist im gezeigten Ausführungsbeispiel das Trägergerüst 2 auf eine geeignete Trägergerüstaufnahme 11 aufgesteckt. Bei der in Fig. 4 mit durchgezogenen Strichen dargestellten Variante der Trägergerüstaufnahme 11 ist diese vorab als Modell gefertigt worden, welches formschlüssig in einem inneren Hohlraum des Trägergerüsts 2 befestigt worden ist bzw. formschlüssig in den Hohlraum des Trägergerüsts 2 eingreift, um das Trägergerüst 2 zu tragen. Zusätzlich ist in Fig. 4 gestrichelt noch eine alternative Variante der Trägergerüstaufnahme 11' dargestellt. Bei dieser Variante ist die Trägergerüstaufnahme 11' direkt am Trägergerüst 2 angebracht bzw. angeformt. Die jeweilige Trägergerüstaufnahme 11 bzw. 11' wird bei beiden Varianten von der Positioniereinrichtung 12 getragen und positioniert. Die Positioniereinrichtung 12 erlaubt günstigerweise eine Ausrichtung bzw. Positionierung der Trägergerüstaufnahme 11 und damit des Zahnersatzes im Raum in Abhängigkeit von Steuerbefehlen der Steuereinrichtung 15, welche wiederum auf dem digitalen Modell des zu erstellenden Zahnersatzes basieren. Im gezeigten Ausführungsbeispiel ist in die Positioniereinrichtung 12 auch die Vibrationseinrichtung 16 integriert, welche über die Trägergerüstaufnahme die Vibrationen in die Verblendung 1 einträgt. Zum Auftrag der Schichten 4 sind im gezeigten Ausführungsbeispiel zwei Auftragseinrichtungen 13 und 14 vorgesehen. Diese werden in Abhängigkeit des zugrundeliegenden digitalen Modells des herzustellenden Zahnersatzes von der Steuereinrichtung 15 entsprechend angesteuert. Die Steuereinrichtung 15 steuert dabei sowohl die Bewegung als auch die Menge des jeweils abgegebenen Materials als auch die Art des Materials. Es ist z. B. möglich, die eine der Auftragseinrichtungen 13 zur Aufbringung der flüssigen Komponente 5 und die andere der Auftragseinrichtungen 14 zur Aufbringung der pulverförmigen Komponente 6 zu verwenden. Es kann sich bei den Auftragseinrichtungen z.B. um Spritzen, Sprüheinrichtungen usw. handeln. Es ist auch denkbar, bereits vorgemischte Suspensionen mittels der Auftragseinrichtung 13 und/oder 14 aufzubringen. Weiter ist es auch denkbar, die von den beiden Auftragseinrichtungen abgegebenen Strahlen so aufeinander zu richten, dass sich die Suspensionen aus flüssiger und pulverförmiger Komponente unmittelbar beim Auftreffen auf die bereits hergestellten Teile des Zahnersatzes oder kurz davor mischen. Die mechanische Ausgestaltung der Auftragseinrichtungen 13 und 14 kann z. B. wie bei an sich bekannten Roboterarmen ausgeführt sein. Die Steuereinrichtung 15 kann mittels einer CAM-Software für die Berechnung der Auftragsbahnen und -wege von mehrachsigen Dreh- und Schwenkeinheiten der Positioniereinrichtung 12 und/oder der Auftragseinrichtungen 13 und 14 ausgestattet sein. Zur Bereitstellung verschiedener pulverförmiger Komponenten 6, flüssiger Komponenten 5 und/oder bereits als Suspension vorliegender Materialgemische in verschiedenen Farben kann ein Magazin 17 vorgesehen sein, in dem entsprechende Patronen oder Spritzen 22 mit entsprechend eingefärbten Materialien zur Verfügung stehen, wobei die Auftragseinrichtungen 13 und 14 entsprechend den Steuerbefehlen der Steuereinrichtung 15 jeweils die für den momentan herzustellenden Teilbereich 7, 8 oder 9 benötigen Patronen und/oder Spritzen 22 aus dem Magazin 17 entnehmen können. Um das Trocknen des Materialgemisches der einzelnen Schichten 4 zu beschleunigen, kann die Verblendvorrichtung 10 eine oder mehrere Trocknungseinrichtungen 18 aufweisen. Dies können z. B. Wärmequellen, Absaugpapiere, Tupfer oder Luftstromtrocknungsanlagen und dergleichen sein. Für eventuell notwendige Formkorrekturen der Verblendung 1 kann die Verblendvorrichtung 10, vorzugsweise ebenfalls im Raum mehrachsig bewegbare, mechanische Formungseinrichtungen 19 aufweisen. Diese können zum Shapen, Schleifen, Bohren usw. eingesetzt werden. Es kann sich um Fräs- oder Bohreinrichtungen aber auch um Klingen und dergleichen handeln. Hiermit sind Korrekturen der äußeren Form der einzelnen Teilbereiche 7, 8 oder 9 oder aber auch der gesamten Verblendung 1 möglich. Die Formkorrektur kann in der Verblendvorrichtung 10 erfolgen. Die Formkorrekturen werden günstigerweise am noch nicht gehärteten bzw. noch nicht gesinterten Rohling der Verblendung 1 durchgeführt. Die Härtung kann, insbesondere wenn man Kunststoffmaterialien verwendet, durch chemische Härtung oder durch geeignete Lichthärtung auch innerhalb der Verblendvorrichtung 10 erfolgen. Verwendet man keramische Materialien, so werden diese günstigerweise nach Herstellung des Zahnersatzes bzw. der Verblendung 1 in einem an sich bekannten Sinterofen gesintert. Die Bewegungen der bewegbaren Teile der Verblendvorrichtung 10 mittels der Steuerreinrichtung 15 können wie bei an sich bekannten CNC-Steuerungen, z. B. analog zur Führung eines Roboterarmes oder analog zur Führung mehrachsiger Bearbeitungsköpfe einer Fräsmaschine erzeugt werden. Entsprechend mehrachsig bewegbar sind günstigerweise sowohl die Trägergerüstaufnahme 11 als auch die Auftragseinrichtungen 13 und 14, als auch die mechanischen Formungseinrichtungen 19, als auch die hier nicht dargestellte Lichtquelle zur Lichthärtung, als auch entsprechend geeignete Trocknungseinrichtungen 18. Die Bestückung der Auftragseinrichtung 13 und/oder 14 erfolgt günstigerweise auch automatisiert über Zugriff in das Magazin 17 in Abhängigkeit entsprechender Steuerbefehle der Steuereinrichtung 15.

### Legende

zu den Hinweisziffern:
- 1: Verblendung
- 2: Trägergerüst
- 3: Oberfläche des Trägergerüstes
- 4: Schicht
- 5: flüssige Komponente
- 6: pulverförmige Komponente
- 7: Teilbereich
- 8: Teilbereich
- 9: Teilbereich
- 10: Verblendvorrichtung
- 11, 11': Trägergerüstaufnahme
- 12: Positioniereinrichtung
- 13: Auftragseinrichtung
- 14: Auftragseinrichtung
- 15: Steuereinrichtung
- 16: Vibrationseinrichtung
- 17: Magazin
- 18: Trocknungseinrichtung
- 19: mechanische Formungseinrichtung
- 20: Zahnstumpf
- 21: Bereich
- 22: Patronen oder Spritzen

## Patentansprüche

1. Verfahren zur Herstellung von Zahnersatz, bei dem zur Herstellung einer Verblendung (1) auf einem Trägergerüst (2) auf eine im Raum gekrümmt angeordnete äußere Oberfläche (3) des Trägergerüsts (2) maschinell, insbesondere rechnergesteuert in Abhängigkeit eines digitalen Modells des Zahnersatzes, mehrere Schichten (4) zumindest eines Materialgemisches aufgetragen werden, wobei die Schichten (4) des Materialgemisches als im Raum gekrümmt angeordnete Schichten aufgetragen werden, **dadurch gekennzeichnet, dass** mehrere Schichten (4) des Materialgemisches unmittelbar aufeinander folgend aufgetragen werden.

2. Verfahren nach Anspruch 1, **dadurch gekennzeichnet, dass** erst nach dem Auftrag von mehreren Schichten (4) des Materialgemisches in einem gesonderten Verfahrensschritt, vorzugsweise erst nach Auftrag aller Schichten (4) der Verblendung (1), ein Härten der bereits aufgetragenen Schichten (4) des Materialgemisches erfolgt.

3. Verfahren nach Anspruch 2, **dadurch gekennzeichnet, dass** im gesonderten Verfahrensschritt ein Sintern oder ein Lichthärten durchgeführt wird.

4. Verfahren nach einem der Ansprüche 1 bis 3, **dadurch gekennzeichnet, dass** als Materialgemisch ein Gemisch aus zumindest einer flüssigen Komponente (5), vorzugsweise in Form eines Binders, und zumindest einer pulverförmigen Komponente (6), vorzugsweise in Form eines Keramikpulvers oder eines Kunststoffpulvers, aufgetragen wird.

5. Verfahren nach einem der Ansprüche 1 bis 4, **dadurch gekennzeichnet, dass** als Materialgemisch eine, vorzugsweise vorgemischte oder erst unmittelbar vor dem oder beim Auftragen gemischte, Suspension aufgetragen wird.

6. Verfahren nach einem der Ansprüche 1 bis 4, **dadurch gekennzeichnet, dass** die Schichten (4) des Materialgemisches jeweils in zumindest zwei voneinander getrennten Verfahrensschritten aufgetragen werden, indem, vorzugsweise zunächst, in einem Verfahrensschritt zumindest eine flüssige Komponente (5), vorzugsweise in Form eines Binders, und, vorzugsweise daran anschließend, in einem anderen Verfahrensschritt zumindest eine pulverförmige Komponente (6), vorzugsweise in Form eines Keramikpulvers oder eines Kunststoffpulvers, aufgetragen wird.

7. Verfahren nach einem der Ansprüche 1 bis 6, **dadurch gekennzeichnet, dass** zumindest ein erstes Materialgemisch in einem ersten Teilbereich (7, 8, 9) oder in ersten Teilbereichen (7, 8, 9) der herzustellenden Verblendung (1) aufgetragen wird und zumindest ein anderes, vorzugsweise anders eingefärbtes, Materialgemisch oder mehrere andere, vorzugsweise anders eingefärbte, Materialgemische in anderen Teilbereichen (7, 8, 9) der herzustellenden Verblendung (1) aufgetragen wird bzw. werden.

8. Binder geeignet für ein Verfahren nach einem der Ansprüche 4 bis 7, **dadurch gekennzeichnet, dass** der Binder einen Klebeanteil, vorzugsweise basierend auf Eiweiß, aufweist.

9. Verblendvorrichtung (10) zur Durchführung des Verfahrens nach einem der Ansprüche 1 bis 8, **dadurch gekennzeichnet, dass** die Verblendvorrichtung (10) zumindest eine Trägergerüstaufnahme (11, 11'), an der das Trägergerüst (2) befestigbar oder angeformt ist, und zumindest eine Positioniereinrichtung (12) zur Positionierung der Trägergerüstaufnahme (11) im Raum und zumindest eine Auftragseinrichtung (13, 14), vorzugsweise mehrere von einander getrennte Auftragseinrichtungen (13, 14), zum Auftrag von Materialgemisch und zumindest eine rechnergestützte Steuereinrichtung (15) aufweist, wobei die Positioniereinrichtung (12) und/oder die Auftragseinrichtung(en) (13, 14) von der Steuereinrichtung (15) ansteuerbar, vorzugsweise im Raum bewegbar, ist bzw. sind.

10. Verblendvorrichtung (10) nach Anspruch 9, **dadurch gekennzeichnet, dass** sie eine Vibrationseinrichtung (16) zum Vibrieren der Trägergerüstaufnahme (11) aufweist und/oder dass sie ein Magazin (17) für die Bereitstellung verschiedener, vorzugsweise verschieden farbiger, Materialgemische und/oder Komponenten von Materialgemischen aufweist und/oder dass sie zumindest eine Trocknungseinrichtung (18) zum Trocknen des Materialgemisches und/oder dass sie zumindest eine mechanische Formungseinrichtung (19) zum Nachbearbeiten der Form der aufgetragenen Schichten (4) des Materialgemisches aufweist.
